# EUROPÄISCHE PATENTSCHRIFT

(11) **EP 3 501 871 B1**
(45) Veröffentlichungstag und Bekanntmachung des Hinweises auf die Patenterteilung: **01.09.2021**
(21) Anmeldenummer: 18206885.8
(22) Anmeldetag: 19.11.2018
(51) Int. Cl.: B60K 23/04, F16H 48/27, B60K 17/16

(54) **AUSGLEICHSGETRIEBEEINHEIT**
DIFFERENTIAL GEAR UNIT
UNITÉ D'ENGRENAGE DIFFÉRENTIEL

(30) Priorität: 19.12.2017 DE 102017223138; 09.02.2018 DE 102018202028
(43) Veröffentlichungstag der Anmeldung: 26.06.2019
(73) Patentinhaber: ZF Friedrichshafen AG, 88046 Friedrichshafen (DE)
(72) Erfinder: Pfeffer, Andreas, 94505 Bernried (DE)
(74) Vertreter: ZF Friedrichshafen AG

(56) Entgegenhaltungen:
- EP-A2- 0 267 419
- WO-A1-2005/012768
- DE-A1- 4 330 581
- DE-A1-102006 018 661
- US-A- 2 583 307

## Beschreibung

Die Erfindung bezieht sich auf eine Ausgleichsgetriebeeinheit für zweiachsgetriebene Kraftfahrzeuge, mit einer ersten Abtriebswelle zur Drehmomentübertragung auf eine erste Fahrzeugachse und mit einer zweiten Abtriebswelle zur Drehmomentübertragung auf eine zweite Fahrzeugachse, mit einem zwischen die beiden Abtriebswellen eingeschalteten Ausgleichsgetriebe.

Bei einer Ausgleichsgetriebeeinheit mit einem Kegelraddifferential ist es bekannt, wobei eine Sperrung des Kegelraddifferentials mit Hilfe einer Hydraulikpumpe erfolgt. Dies ist aufgrund der Vielzahl der Bauteile aufwendig und teuer und benötigt einen großen Bauraum.

Aus der DE 10 2006 018 661 A1 ist ein Differenzialgetriebe für ein Kraftfahrzeug bekannt, das ein eingangsseitiges Antriebsmoment auf zwei Abtriebswellen aufteilt und dem zumindest eine Überlagerungsstufe zugeordnet ist. Mittels der Überlagerungsstufe ist ein Drehmomentverhältnis zwischen den beiden Abtriebswellen festlegbar. Die Überlagerungsstufe ist außerdem mit einem Bremsmomenterzeuger verbunden, mit dem ein auf die Überlagerungsstufe wirkendes Bremsmoment erzeugbar ist, wobei der Bremsmomenterzeuger eine Pumpe ist. Auf der Druckseite der Pumpe ist ein Hydraulikventil angeordnet, welches in Abhängigkeit von Raddrehzahlen gesteuert werden kann.

Die WO 2005/012768 A1 beschreibt ein Differentialgetriebe mit veränderlicher Drehmomentverteilung zwischen zwei Abtriebswellen. Das Differentialgetriebe umfasst dabei einen drehbar gelagerten und antreibbaren Differentialkorb, mit dem Differentialkorb umlaufende Ausgleichsräder und im Differentialkorb drehbar gelagerte Abtriebswellenräder zum Antrieb der Abtriebswellen sowie ein Hydrauliksystem. Das Hydrauliksystem umfasst seinerseits zwei hydraulische Maschinen die jeweils ein Gehäuse, einen Rotor, eine Einlassseite und eine Auslassseite aufweisen, wobei das Gehäuse bezüglich Drehung festgesetzt ist und der Rotor drehend antreibbar ist. Die Einlassseiten der hydraulischen Maschinen sind über Kreuz mit den Auslassseiten verbunden und zumindest eine der hydraulischen Maschinen verfügt über einen stufenlos verstellbaren Fördervolumenstrom. Der drehend antreibbare Teil der einen hydraulischen Maschine ist mit dem einen Abtriebswellenrad und der drehend antreibbare Teil der anderen hydraulischen Maschine mit dem anderen Abtriebswellenrad verbunden.

In der EP 0 267 419 A2 wird eine Differentialsperre für Ausgleichsgetriebe in Kraftfahrzeugen, die an den Abtriebswellen des Ausgleichsgetriebes wirksam ist, beschrieben. Den Abtriebswellen sind hydraulische bzw. elektrische Antriebseinheiten zugeordnet, welche die Differentialsperre bilden. Die Antriebseinheiten arbeiten abhängig von der Drehzahldifferenz zwischen der Drehzahl der einen Abtriebswelle und der Drehzahl der anderen Abtriebswelle wechselseitig als Pumpe oder Motor bzw. Generator oder Motor.

Aus der US 2 583 307 A ist ein Hydrauliksystem zum Steuern der Drehzahl eines Wellenpaares bekannt. Das Hydrauliksystem umfasst eine erste und eine zweite Verdrängerpumpe, die von einer der Wellen angetrieben werden, sowie eine dritte und eine vierte Verdrängerpumpe, die von der anderen der Wellen angetrieben werden. Eine erste Leitung verbindet den Auslass der ersten Pumpe mit dem Einlass der dritten Pumpe, wobei die Leitung auch mit einer Fluidquelle in Verbindung steht. Eine zweite Leitung verbindet den Auslass der vierten Pumpe mit dem Einlass der zweiten Pumpe, wobei die Leitung ebenfalls mit der Fluidquelle in Verbindung steht. Eine dritte Leitung verbindet den Auslass der zweiten Pumpe mit dem Einlass der vierten Pumpe, wobei die Leitung auch mit einem ersten Arbeitskolben in Verbindung steht. Eine vierte Leitung verbindet den Auslass der dritten Pumpe mit dem Einlass der ersten Pumpe, wobei die Leitung auch mit einem zweiten Arbeitskolben in Verbindung steht.

Die DE 43 30 581 A1 offenbart ein Differentialsperrsystem für eine Lenkantriebsachse, das wenigstens eine Scheiben- und Gegenscheibengruppe aufweist, wobei die Scheibengruppe mit einem Kegelrad drehfest verbunden ist, das mit einer von einer Antriebswelle angetriebenen Abtriebswelle des Differentialgetriebes drehfest verbunden ist. Die Gegenscheibengruppe ist mit einem Planetenträger drehfest verbunden, der seinerseits mit einem Tellerrad des Differentialgetriebes drehfest verbunden ist.

Eine Pumpe ist innerhalb der Achse angeordnet ist und wird durch die Antriebswelle der Achse angetrieben. Das von der Pumpe aus dem Innenraum der Achse entnommene Öl treibt wenigstens einen Kolben an, der zusammen mit dem Differentialgetriebe dreht. Mittels eines vom wenigstens einen Kolben ausgeübten Axialdrucks kann das Differentialgetriebe gesperrt werden.

Aufgabe der Erfindung ist es eine Ausgleichsgetriebeeinheit der eingangs genannten Art zu schaffen, die bei reduzierter Anzahl an Bauteilen einen geringeren Bauraum benötigt.

Diese Aufgabe wird erfindungsgemäß dadurch gelöst, dass das Ausgleichsgetriebe eine abhängig von einer Drehzahldifferenz zwischen den beiden Abtriebswellen eine antreibbare Hydraulikpumpe ist, die Hydrauliköl mit einem Volumenstrom entsprechend der Drehzahldifferenz fördert und mit einem hydraulischen Steuerkreis mit einer Hydraulikleitung, die eine Verbindung des Druckanschlusses der Hydraulikpumpe mit dem Sauganschluss der Hydraulikpumpe herstellt.

Der Volumenstrom wird dabei von der Steuereinheit so gesteuert, dass sich die Drehzahlen der Antriebswellen aneinander oder an eine Vorgabedrehzahldifferenz angleichen.

Die Hydraulikpumpe ist vorzugsweise eine Kolbenpumpe, durch die höhere Drücke und damit höhere Kräfte erzeugt werden können.

In der Hydraulikleitung kann eine Ventileinheit angeordnet sein, durch die der Volumenstrom des die Hydraulikleitung durchströmenden Hydrauliköls entsprechend der Drehzahldifferenz regelbar ist.

Dabei ist die Ventileinheit zur schnellen und präzisen Regelung vorzugsweise eine von einer Steuereinheit ansteuerbare Magnetventileinheit.

Die Aufgabe wird erfindungsgemäß weiterhin dadurch gelöst, dass die Hydraulikpumpe einen um eine Drehachse drehbaren Rotor und einen um die Drehachse drehbaren Steuerkurvenring aufweisen, wobei der Rotor mit der zur Drehachse koaxialen ersten Fahrzeugachse fest verbunden ist und wobei der Steuerkurvenring mit der zur Drehachse koaxialen zweiten Fahrzeugachse fest verbunden und von einem Abtriebsrad des motorischen Antriebs drehbar antreibbar ist.

In Umkehrung der Zuordnung der Fahrzeugachsen kann auch die Hydraulikpumpe einen um eine Drehachse drehbaren Rotor und einen um die Drehachse drehbaren Steuerkurvenring aufweisen, wobei der Rotor mit der zur Drehachse koaxialen zweiten Fahrzeugachse fest verbunden ist und wobei der Steuerkurvenring mit der zur Drehachse koaxialen ersten Fahrzeugachse fest verbunden und von einem Abtriebsrad des motorischen Antriebs drehbar antreibbar ist.

Ausführungsbeispiele der Erfindung sind in der Zeichnung dargestellt und werden im Folgenden näher beschrieben. Es zeigen
- Figur 1: eine Prinzipdarstellung eines ersten Ausführungsbeispiels einer Ausgleichsgetriebeeinheit
- Figur 2: eine Prinzipdarstellung eines zweiten Ausführungsbeispiels einer Ausgleichsgetriebeeinheit
- Figur 3: eine Prinzipdarstellung eines dritten Ausführungsbeispiels einer Ausgleichsgetriebeeinheit
- Figur 4: eine Prinzipdarstellung eines vierten Ausführungsbeispiels einer Ausgleichsgetriebeeinheit
- Figur 5: eine Prinzipdarstellung eines fünften Ausführungsbeispiels einer Ausgleichsgetriebeeinheit.

Die in den Figuren dargestellten Ausgleichsgetriebeeinheiten eines Kraftfahrzeugs weisen ein Abtriebsrad 1 auf, das von einem nicht dargestellten motorischen Antrieb des Kraftfahrzeugs drehbar antreibbar sind.

Von dem Abtriebsrad 1 wird ein Steuerkurvenring 2 oder ein Rotor 3 einer Kolbenpumpe 5 um eine Drehachse 4 drehbar angetrieben.

Koaxial zur Drehachse 4 weist der Rotor 3 oder der Steuerkurvenring 2 sich zueinander diametral erstreckend eine erste Abtriebswelle 6 zur Antriebsübertragung auf eine nicht dargestellte erste Fahrzeugachse und eine zweite Abtriebswelle 7 zur Antriebsübertragung auf eine nicht dargestellte zweite Fahrzeugachse auf.

Der Volumenstrom der Kolbenpumpe 5 ist durch ein Mehrwege-Magnetventil abhängig von einer Drehzahldifferenz zwischen den Drehzahlen der beiden Abtriebswellen 6 und 7 steuerbar.

Diese Drehzahldifferenz kann sich unmittelbar auf die Drehzahlen der beiden Abtriebswellen 6 und 7 beziehen, wenn die beiden Fahrzeugachsen mit denselben Drehzahlen angetrieben werden.

Sind die Drehzahlen der beiden Fahrzeugachsen unterschiedlich, so bezieht sich die Drehzahldifferenz auf die Abweichung von einer Vorgabedrehzahldifferenz der Drehzahlen.

Das Mehrwege-Magnetventil und damit der Volumenstrom wird von einer nicht dargestellten Regeleinheit so geregelt, dass sich die Drehzahlen aneinander oder an die Vorgabedrehzahldifferenz angleichen.

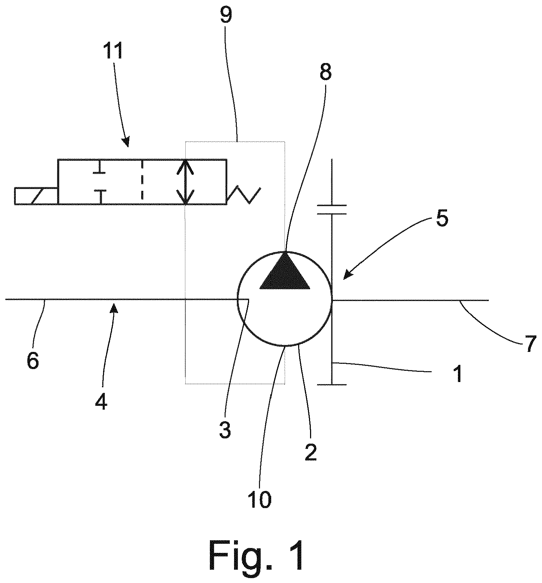

Bei dem Ausführungsbeispiel der Figur 1 wird von dem Abtriebsrad 1 der Steuerkurvenring 2 der Kolbenpumpe 5 um die Drehachse 4 drehbar angetrieben. Dabei fördert die Kolbenpumpe 5 von ihrem Druckanschluss 8 Hydrauliköl über eine Hydraulikleitung 9 zu ihrem Sauganschluss 10. In der Hydraulikleitung 9 ist ein 2/2 Magnetwegeventil 11 angeordnet, das in seiner einen Stellposition den Ventildurchgang öffnet und in der anderen Stellposition schließt.

Der Rotor 3 der Kolbenpumpe 5 ist koaxial zur Drehachse 4 mit der ersten Antriebswelle 6 drehfest verbunden, während der Steuerkurvenring 2 der Kolbenpumpe 5 mit der sich diametral zur ersten Abtriebswelle 6 erstreckenden zweiten Abtriebswelle 7 drehfest verbunden ist.

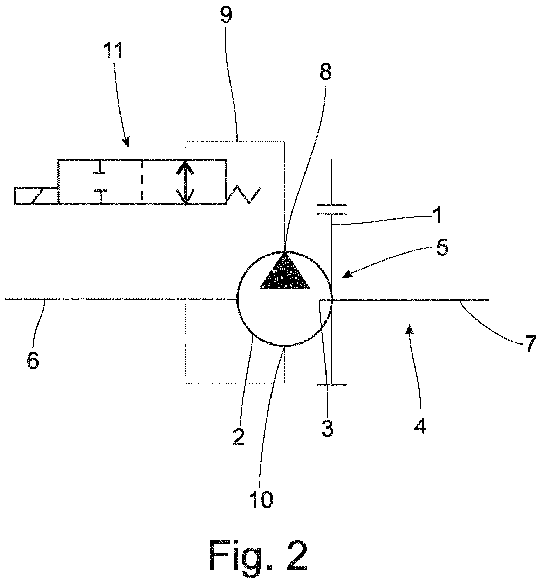

Das Ausführungsbeispiel der Figur 2 entspricht weitgehend dem Ausführungsbeispiel der Figur 1. Im Unterschied zu Figur 1 wird von dem Abtriebsrad 1 der Rotor 3 der Kolbenpumpe 5 um die Drehachse 4 drehbar angetrieben, der koaxial zur Drehachse 4 mit der zweiten Antriebswelle 7 drehfest verbunden ist, während der Steuerkurvenring 2 der Kolbenpumpe 5 mit der sich diametral zur zweiten Abtriebswelle 7 erstreckenden ersten Abtriebswelle 6 drehfest verbunden ist.

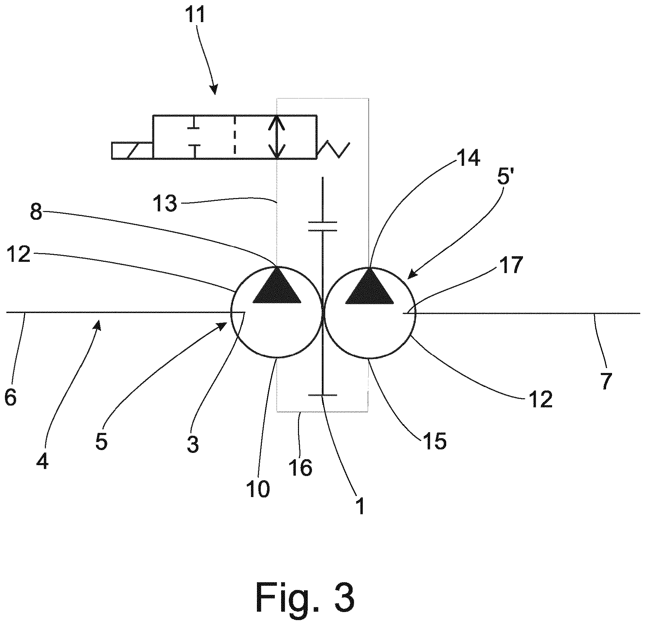

Bei dem Ausführungbeispiel der Figur 3 wird von dem Abtriebsrad 1 sowohl ein erster Steuerkurvenring 12 einer ersten Kolbenpumpe 5 als auch ein zweiter Steuerkurvenring 12' einer zweiten Kolbenpumpe 5' um die Drehachse 4 drehbar angetrieben. Dabei fördert die erste Kolbenpumpe 5 von ihrem Druckanschluss 8 über eine erste Hydraulikleitung 13 zu dem Druckanschluss 14 der zweiten Kolbenpumpe 5'. Die Sauganschlüsse 10 und 15 der ersten Kolbenpumpe 5' und der zweiten Kolbenpumpe sind über eine zweite Hydraulikleitung 16 miteinander verbunden.

In der ersten Hydraulikleitung 13 ist ein 2/2 Magnetwegeventil 11 angeordnet, das in seiner einen Stellposition den Ventildurchgang öffnet und in der anderen Stellposition schließt.

Der Rotor 3 der ersten Kolbenpumpe 5 ist koaxial zur Drehachse 4 mit der ersten Abtriebswelle 6 drehfest verbunden, während der Rotor 17 der zweiten Kolbenpumpe 5' mit der sich diametral zur ersten Abtriebswelle 6 erstreckenden zweiten Abtriebswelle 7 drehfest verbunden ist.

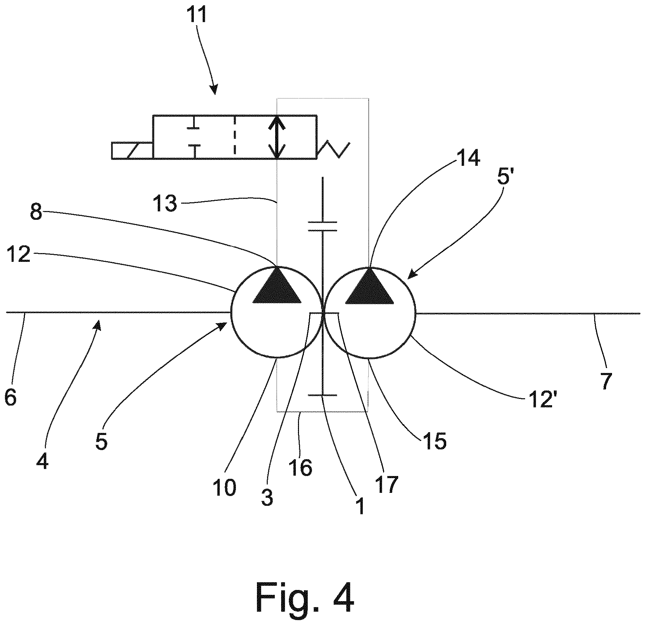

Das Ausführungsbeispiel der Figur 4 entspricht weitgehend dem Ausführungsbeispiel der Figur 3. Im Unterschied zu Figur 3 werden von dem Abtriebsrad 1 der erste Steuerkurvenring 12 der ersten Kolbenpumpe 5 und der zweite Steuerkurvenring 12' der zweiten Kolbenpumpe 5' um die Drehachse 4 drehbar angetrieben, die koaxial zur Drehachse 4 mit der ersten Abtriebswelle 6 bzw. der zweiten Antriebswelle 7 drehfest verbunden sind.

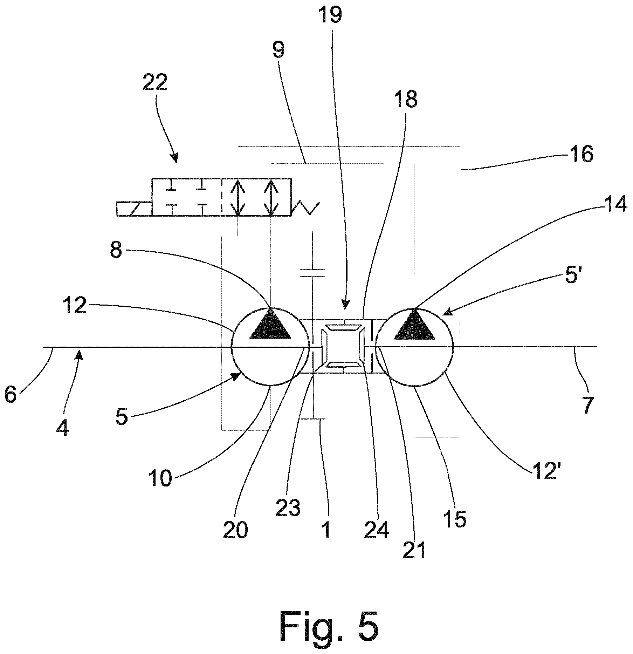

Bei dem Ausführungsbeispiel der Figur 5 wird von dem Abtriebsrad 1 ein erster Steuerkurvenring 12 einer ersten Kolbenpumpe 5, ein zweiter Steuerkurvenring 12' einer zweiten Kolbenpumpe 5' sowie ein Differentialkorb 18 eines zwischen den beiden Kolbenpumpen 5 und 5' angeordneten Ausgleichsdifferentials 19 um die Drehachse 4 drehbar angetrieben.

Eine zur Drechachse 4 koaxiale mit einem ersten Achswellenrad 23 verbundene erste Abtriebswelle 20 des Ausgleichsdifferentials 19 ist mit der ersten Abtriebswelle 6 drehfest verbunden.

Eine zur Drechachse 4 koaxiale mit einem zweiten Achswellenrad 24 verbundene zweite Abtriebswelle 21 des Ausgleichsdifferentials 19 ist mit der zweiten Abtriebswelle 7 drehfest verbunden.

Die Druckanschlüsse 8 und 14 der ersten Hydraulikpumpe 5 und der zweiten Hydraulikpumpe 5' sind über eine erste Hydraulikleitung 9 miteinander verbunden, in der ein 2/4 Magnetventil 22 angeordnet ist, das den Volumenstrom in der ersten Hydraulikleitung 9 steuert. Die Sauganschlüsse 10 und 15 der ersten Hydraulikpumpe 5 und der zweiten Hydraulikpumpe 5' sind über eine zweite Hydraulikleitung 16 miteinander verbunden, die ebenfalls über das 2/4 Magnetventil 22 führt, die die Volumenströme in der ersten Hydraulikleitung 9 und in der zweiten Hydraulikleitung 16 steuert.

### Bezugszeichen

- 1: Abtriebsrad
- 2: Steuerkurvenring
- 3: Rotor
- 4: Drehachse
- 5: erste Kolbenpumpe
- 5': zweite Kolbenpumpe
- 6: erste Abtriebswelle
- 7: zweite Abtriebswelle
- 8: Druckanschluss
- 9: Hydraulikleitung
- 10: Sauganschluss
- 11: 2/2 Magnetproportionalventil
- 12: erster Steuerkurvenring
- 12': zweiter Steuerkurvenring
- 13: erste Hydraulikleitung
- 14: Druckanschluss
- 15: Sauganschluss erste Kolbenpumpe
- 16: zweite Hydraulikleitung
- 17: Rotor zweite Kolbenpumpe
- 18: Differentialkorb
- 19: Ausgleichsdifferential
- 20: erste Abtriebswelle
- 21: zweite Abtriebswelle
- 22: 2/4 Magnetventil
- 23: erstes Achswellenrad
- 24: zweites Achswellenrad

## Patentansprüche

1. Ausgleichsgetriebeeinheit für zweiachsgetriebene Kraftfahrzeuge, mit einem motorischen Antrieb, mit einer ersten Fahrzeugachse, mit einer zweiten Fahrzeugachse, mit einer ersten Abtriebswelle (6) zur Drehmomentübertragung auf die erste Fahrzeugachse und mit einer zweiten Antriebswelle (7) zur Drehmomentübertragung auf die zweite Fahrzeugachse, mit einem zwischen die beiden Wellen (6, 7) eingeschalteten Ausgleichsgetriebe, wobei das Ausgleichsgetriebe eine abhängig von einer Drehzahldifferenz zwischen den beiden Wellen (6, 7) antreibbare Hydraulikpumpe (5, 5') ist, die Hydrauliköl mit einem Volumenstrom entsprechend der Drehzahldifferenz fördert und mit einem hydraulischen Steuerkreis mit einer Hydraulikleitung (9, 13, 16), die eine Verbindung des Druckanschlusses (8, 14) der Hydraulikpumpe (5, 5') mit dem Sauganschluss (10, 15) der Hydraulikpumpe (5, 5') herstellt,
**dadurch gekennzeichnet,**
**dass** die Hydraulikpumpe (5, 5') einen um eine Drehachse (4) drehbaren Rotor (3) und einen um die Drehachse (4) drehbaren Steuerkurvenring (2) aufweist, wobei der Rotor (3) mit der zur Drehachse (4) koaxialen ersten Fahrzeugachse fest verbunden ist und wobei der Steuerkurvenring (2) mit der zur Drehachse (4) koaxialen zweiten Fahrzeugachse fest verbunden und von einem Abtriebsrad (1) des motorischen Antriebs drehbar antreibbar ist oder
**dass** die Hydraulikpumpe (5, 5') einen um eine Drehachse (4) drehbaren Rotor (3) und einen um die Drehachse (4) drehbaren Steuerkurvenring (2) aufweist, wobei der Rotor (3) mit der zur Drehachse (4) koaxialen zweiten Fahrzeugachse fest verbunden ist und wobei der Steuerkurvenring (2) mit der zur Drehachse (4) koaxialen ersten Fahrzeugachse fest verbunden und von einem Abtriebsrad (1) des motorischen Antriebs drehbar antreibbar ist.

2. Ausgleichsgetriebeeinheit nach Anspruch 1, **dadurch gekennzeichnet, dass** die Hydraulikpumpe eine Kolbenpumpe (5, 5') ist.

3. Ausgleichsgetriebeeinheit nach Anspruch 1, **dadurch gekennzeichnet, dass** in der Hydraulikleitung (9, 13, 16) eine Ventileinheit (11, 22) angeordnet ist, durch die der Volumenstrom des die Hydraulikleitung (9, 13, 16) durchströmenden Hydrauliköls entsprechend der Drehzahldifferenz regelbar ist.

4. Ausgleichsgetriebeeinheit nach Anspruch 3, **dadurch gekennzeichnet, dass** die Ventileinheit (11, 22) eine von einer Regeleinheit ansteuerbare Magnetventileinheit (11, 22) ist.

## Claims

1. Differential gear unit for motor vehicles which are driven by two axles, with a motorized drive, with a first vehicle axle, with a second vehicle axle, with a first output shaft (6) for the transmission of torque to the first vehicle axle and with a second drive shaft (7) for the transmission of torque to the second vehicle axle, with a differential gear which is connected between the two shafts (6, 7), the differential gear being a hydraulic pump (5, 5') which can be driven in a manner which is dependent on a rotational speed difference between the two shafts (6, 7) and delivers hydraulic oil with a volumetric flow in accordance with the rotational speed difference, and with a hydraulic control circuit with a hydraulic line (9, 13, 16) which establishes a connection of the pressure connector (8, 14) of the hydraulic pump (5, 5') to the suction connector (10, 15) of the hydraulic pump (5, 5'),
**characterized**
**in that** the hydraulic pump (5, 5') has a rotor (3) which can be rotated about a rotational axis (4) and a control cam ring (2) which can be rotated about the rotational axis (4), the rotor (3) being connected fixedly to the first vehicle axle which is coaxial with respect to the rotational axis (4), the control cam ring (2) being connected fixedly to the second vehicle axle which is coaxial with respect to the rotational axis (4), and it being possible for the said control cam ring (2) to be driven rotationally by an output wheel (1) of the motorized drive, or
**in that** the hydraulic pump (5, 5') has a rotor (3) which can be rotated about a rotational axis (4) and a control cam ring (2) which can be rotated about the rotational axis (4), the rotor (3) being connected fixedly to the second vehicle axle which is coaxial with respect to the rotational axis (4), the control cam ring (2) being connected fixedly to the first vehicle axle which is coaxial with respect to the rotational axis (4), and it being possible for the said control cam ring (2) to be driven rotationally by an output wheel (1) of the motorized drive.

2. Differential gear unit according to Claim 1, **characterized in that** the hydraulic pump is a piston pump (5, 5').

3. Differential gear unit according to Claim 1, **characterized in that** a valve unit (11, 22) is arranged in the hydraulic line (9, 13, 16), by way of which valve unit (11, 22) the volumetric flow of the hydraulic oil which flows through the hydraulic line (9, 13, 16) can be regulated in accordance with the rotational speed difference.

4. Differential gear unit according to Claim 3, **characterized in that** the valve unit (11, 22) is a solenoid valve unit (11, 22) which can be actuated by a regulating unit.

## Revendications

1. Unité d'engrenage différentiel pour véhicules automobiles à deux essieux, comprenant un dispositif d'entraînement motorisé, un premier essieu de véhicule, un deuxième essieu de véhicule, un premier arbre de sortie (6) pour la transmission de couple au premier essieu de véhicule et un deuxième arbre d'entraînement (7) pour la transmission de couple au deuxième essieu de véhicule, un engrenage différentiel inséré entre les deux arbres (6, 7), l'engrenage différentiel étant une pompe hydraulique (5, 5') pouvant être entraînée en fonction d'une différence de vitesse de rotation entre les deux arbres (6, 7), qui débite de l'huile hydraulique avec un débit volumique selon la différence de vitesse de rotation, et comprenant un circuit de commande hydraulique doté d'une conduite hydraulique (9, 13, 16) qui établit une liaison du raccord de pression (8, 14) de la pompe hydraulique (5, 5') avec un raccord d'aspiration (10, 15) de la pompe hydraulique (5, 5'),
**caractérisée**
**en ce que** la pompe hydraulique (5, 5') présente un rotor (3) pouvant tourner autour d'un axe de rotation (4) et un anneau à cames de commande (2) pouvant tourner autour de l'axe de rotation (4), le rotor (3) étant relié solidement au premier essieu de véhicule, coaxial à l'axe de rotation (4), et l'anneau à cames de commande (2) étant relié solidement au deuxième essieu de véhicule, coaxial à l'axe de rotation (4), et pouvant être entraîné en rotation par un pignon de sortie (1) du dispositif d'entraînement motorisé, ou
**en ce que** la pompe hydraulique (5, 5') présente un rotor (3) pouvant tourner autour d'un axe de rotation (4) et un anneau à cames de commande (2) pouvant tourner autour d'un axe de rotation (4), le rotor (3) étant relié solidement au deuxième essieu de véhicule, coaxial à l'axe de rotation (4), et l'anneau à cames de commande (2) étant relié solidement au premier essieu de véhicule, coaxial à l'axe de rotation (4), et pouvant être entraîné en rotation par un pignon de sortie (1) du dispositif d'entraînement motorisé.

2. Unité d'engrenage différentiel selon la revendication 1, **caractérisée en ce que** la pompe hydraulique est une pompe à piston (5, 5').

3. Unité d'engrenage différentiel selon la revendication 1, **caractérisée en ce que** dans la conduite hydraulique (9, 13, 16) est disposée une unité de vanne (11, 22) par laquelle le débit volumique de l'huile hydraulique passant par la conduite hydraulique (9, 13, 16) est réglable en fonction de la différence de vitesse de rotation.

4. Unité d'engrenage différentiel selon la revendication 3, **caractérisée en ce que** l'unité de vanne (11, 22) est une unité d'électrovanne (11, 12) pouvant être pilotée par une unité de régulation.
